# FASCICULE DE BREVET EUROPEEN

(11) **EP 2 822 692 B1**
(45) Date de publication et mention de la délivrance du brevet: **05.02.2020**
(21) Numéro de dépôt: 13712308.9
(22) Date de dépôt: 04.03.2013
(51) Int. Cl.: B03B 1/04, B03B 5/28, B03B 5/36

(54) **PROCEDE ET INSTALLATION POUR LE TRI SELECTIF DE MATERIAUX BROYES DE NATURES DIFFERENTES COMPRENANT DES MATIERES PLASTIQUES**
VERFAHREN UND VORRICHTUNG ZUM SELEKTIVEN SORTIEREN VON UNTERSCHIEDLICHEN ZERKLEINERTEN KUNSTSTOFFENTHALTENDEN MATERIALIEN
PROCESS AND DEVICE FOR SELECTIVE SEPARATION OF DIFFERENT GRINDED MATERIALS COMPRISING PLASTICS

(30) Priorité: 08.03.2012 FR 1252111
(43) Date de publication de la demande: 14.01.2015
(73) Titulaire: Galloo Plastics, 59250 Halluin (FR)
(72) Inventeur: DE FERAUDY, Hugues, 69220 Charentais (FR); HEYMANS, Sophie, 59116 Houplines (FR)
(74) Mandataire: IP Trust
(86) Numéro de dépôt international: PCT/FR2013/050458
(87) Numéro de publication internationale: WO 2013/132183

(56) Documents cités:
- EP-B1- 1 058 609
- US-A- 5 653 867
- US-A1- 2008 251 426
- US-A1- 2012 032 009

## Description

### Domaine de l'invention

La présente invention concerne le domaine du tri sélectif pour le recyclage des plastiques, par des étapes de broyage des matériaux et déchets à recycler, puis de séparation par densité des matières. L'étape de séparation permet d'isoler les différents types de matières plastiques telles que le polypropylène, le polyéthylène, l'ABS, à des degrés de puretés suffisants pour servir à nouveau à la production de pièces industrielles.

### Etat de la technique

On connaît dans l'état de la technique des procédés de tri sélectif de mélanges de matières plastiques de natures différentes.

Le brevet EP1058609 décrit un procédé pour séparer toutes catégories de matériaux polymères provenant de déchets, se caractérise par des étapes et des phases successives, qui sont mises en oeuvre selon l'ordre qui suit. En série, une étape de broyage est suivie d'une étape de séparation mécanique par facteur de forme à tambour rotatif, qui est suivie d'une première phase de séparation par densité à étapes disposées en parallèle, qui est suivie d'une étape énergique de nettoyage des matériaux polymères puis se terminant, par une deuxième phase de séparation par densité à étapes disposées en parallèle. Ces matériaux polymères peuvent le cas échéant être extrudés. Le procédé permet d'obtenir différentes catégories de matériaux polymères, et notamment du PE, du PP, du PS, de l'ABS, des PP chargés de 20 à 40 %, des PA, du PMMA, du XenoyTM, du PVC.

Un autre document, le brevet européen EP0918606 décrit un procédé de séparation de matériaux polymères fragmentés, provenant de broyage de véhicules automobiles et/ou autres objets en fin de vie qui pratique, sur un flux constitué d'un mélange de polymères et/ou copolymères chargés ou non, dont les densités s'étagent de 1 à 1,6, la séparation en milieu liquide dense mettant en oeuvre une suspension faite d'argile pulvérulente dispersée dans de l'eau, afin d'obtenir un milieu séparatif par densité à un seuil de densité choisi.

Ces méthodes sont efficaces pour séparer des matériaux thermoplastiques.

Toutefois la présence de composés caoutchoucs ou élastomères thermodurcissables constitue un problème majeur. Ces composés dégradent les propriétés mécaniques des produits thermoplastiques recyclés issus de ces procédés de recyclage.

Ces composés ne sont pas fusibles, et peuvent conduire au colmatage des filtres et équipements de traitement.

De plus la présence de caoutchoucs thermodurcissables se traduit par des nuisances olfactives sur les produits thermoplastiques issus de ces procédés.

On a donc cherché dans l'art antérieur à éliminer ces composés indésirables. Diverses solutions ont été envisagées.

Une première famille de solution concerne des équipements de séparation laser, électrostatiques ou mécaniques. La séparation mécanique se fonde sur les différences de rebonds entre les granulés en caoutchouc et les granulés thermoplastiques. Son efficacité est toutefois limitée et nécessite des repassages des produits pour aboutir à un niveau de séparation acceptable.

Une deuxième famille de solution concerne la séparation par flottaison. Cette méthode n'est pas efficace car les matériaux à base de caoutchouc ou d'élastomère thermodurcissables présentent des densités très proches de la densité de l'ABS, qui est un des matériaux à récupérer. De plus, la densité des caoutchoucs et élastomères thermodurcissables et leur comportement dans les bains densitométriques dépend de leur structuration, et notamment de la présence d'alvéoles et cavités fermées ou ouvertes, que l'on rencontre dans les matériaux moussés. Le rendement de la séparation des constituants indésirables est très médiocre.

### Solution apportée par l'invention

Afin de remédier à ces inconvénients, l'invention concerne selon son acception la plus générale un procédé de tri sélectif de matériaux granulaires de natures différentes comprenant des matières plastiques ainsi que des impuretés constituées d'élastomères ou de caoutchoucs, ledit procédé comportant au moins une étape de séparation par densité caractérisé en ce qu'il comporte une étape de traitement de l'ensemble desdits matériaux dans un bain contenant un agent chimique apte à modifier de manière sélective la densité apparente des élastomères et caoutchoucs par une dégradation partielle d'un des constituants de l'élastomère ou du caoutchouc ou par une interaction sélective surfacique avec les granules d'élastomères ou de caoutchoucs thermodurcissables puis à appliquer une étape de rinçage desdits matériaux et à appliquer une étape de séparation par densité dans un bain de densité 1.

On entend par « densité apparente » le rapport de la masse entre l'élément thermoplastique (élastomères et caoutchoucs) et les bulles d'air encapsulées, et leur volume.

Lorsque la matière thermoplastique est poreuse, elle se comporte comme une matière plus légère qu'elle n'est en réalité.

Selon l'invention, ledit agent chimique est apte à modifier de manière sélective la densité apparente des élastomères et caoutchoucs par une dégradation partielle d'un des constituants de l'élastomère ou du caoutchouc.

Selon l'invention ledit agent chimique est apte à modifier de manière sélective la densité apparente des élastomères et caoutchoucs par une interaction sélective surfacique avec les granules d'élastomères ou de caoutchoucs.

Plusieurs agents chimiques sont utilisables, notamment des distillats légers de pétrole hydrotraités, ainsi que des distillats légers de pétrole hydrotraités contenant des esters végétaux. Avantageusement, ledit agent chimique est un distillat léger de pétrole hydrotraité contenant un ester végétal sans composés organo-volatils.

Selon un mode de réalisation particulier, ladite étape de traitement dans un bain contenant ledit agent chimique est réalisée dans une cuve, de préférence comportant des moyens d'agitation pendant une durée de une à vingt quatre heures, et de préférence de six à huit heures.

Avantageusement, le procédé comporte une étape d'égouttage des matériaux granulaires issus de la cuve de traitement par l'agent chimique.

Selon une variante, il comporte, préalable à l'entrée des matériaux granulaires dans la cuve de traitement par ledit agent chimique, une étape de séchage mécanique, notamment dans une centrifugeuse.

Selon une autre variante, le procédé selon l'invention comporte, préalable à l'entrée des matériaux granulaires dans la cuve de traitement par ledit agent chimique une étape de dépoussiérage.

Avantageusement, les matériaux granulaires sortant de la cuve de traitement par ledit agent chimique sont traités dans un équipement d'égouttage comportant des moyens de récupération de l'agent et de réinjection dans ladite cuve de traitement.

De préférence, l'étape finale de séparation dans un bain de densité 1 est réalisée dans une cuve comportant des moyens de récupération des fractions lourdes en vue de leur réutilisation, ainsi que des moyens de récupération du flottant comprenant un crible pour séparer les matières solides de l'agent chimique, ledit agent chimique étant réintroduit dans ladite cuve de traitement.

Selon un mode de réalisation particulier, le procédé comporte en outre une étape de prétraitement par séparation densimétrique séparant des composants styréniques tels que l'ABS d'une part et le PS d'autre part dans un bain densimétrique, pour récupérer un mélange de granules d'ABS et de caoutchoucs et éliminer une partie des caoutchoucs et une grande majorité du polystyrène.

Avantageusement, l'étape de prétraitement comprend en outre une étape de séparation densimétrique dans un séparateur qui contient un deuxième bain densimétrique de densité 1, pour récupérer le polystyrène et le séparer du polypropylène chargé et du caoutchouc alvéolaire.

Selon un mode de réalisation particulier, l'étape de prétraitement comprend en outre une étape de séparation densimétrique dans un séparateur contenant un bain densimétrique de densité 1, pour séparer le polypropylène chargé.

L'invention concerne également une installation pour la mise en oeuvre du procédé conforme à l'une au moins des revendications 1-13, caractérisée en ce qu'elle comprend au moins une cuve contenant un agent chimique apte à modifier de manière sélective la densité apparente des élastomères et des caoutchoucs sans dénaturer les thermoplastiques à récupérer par une dégradation partielle d'un des constituants de l'élastomère ou du caoutchouc ou par une interaction sélective surfacique avec les granules d'élastomères ou de caoutchoucs thermodurcissables, un crible permettant l'égouttage des matières solides et la récupération de l'agent chimique à partir du contenu provenant de ladite cuve.

Selon une variante, l'installation selon l'invention comprend en outre des moyens pour le transfert des matières solides dans une cuve de rinçage contenant de l'eau, avant d'être déversées dans un séparateur densimétrique à densité 1 contenant un bain d'eau.

De préférence, ladite cuve de rinçage comprend des moyens pour récupérer les flottants par débordement dans un crible séparant l'agent chimique qui est récupéré dans un bac pour être réintroduit dans le circuit de circulation, en amont du filtre, et les matières solides sont éliminées ou retraitées.

Le séparateur comprend une vis sans fin pour récupérer les matières thermoplastiques et des moyens pour transporter lesdites matières thermoplastiques dans une centrifugeuse et un dépoussiéreur assurant un envoi d'air.

Selon un mode de réalisation particulier l'installation comporte en outre en amont de la cuve une centrifugeuse pour l'égouttage des matériaux granulaires introduits dans l'installation.

Selon une variante avantageuse, l'agent chimique est filtré par un filtre avant d'être réintroduit dans la cuve.

### Description détaillée d'un exemple non limitatif de réalisation

La présente invention sera mieux comprise à la lecture de la description qui suit, se référant à des exemples non limitatifs de réalisation illustrés par les dessins annexés où :
- la figure 1 représente une vue schématique d'une installation pour la mise en oeuvre du procédé selon l'invention
- la figure 2 représente une installation de prétraitement optionnelle.

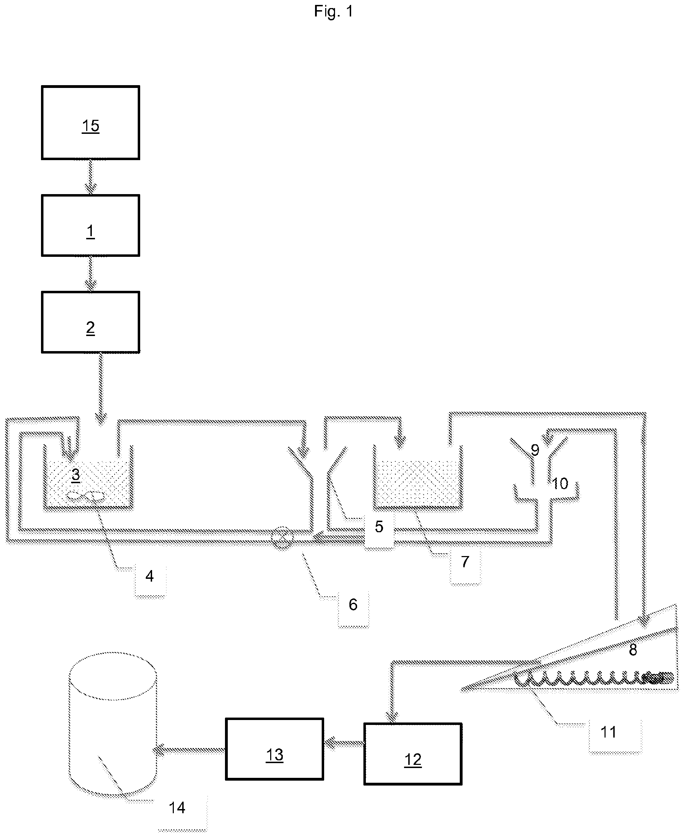

La figure 1 représente une vue schématique d'une installation pour la mise en oeuvre de l'invention.

Les composants à traiter pour le recyclage de matières thermoplastiques se présentent sous la forme de broyés dont la taille moyenne est de 12 millimètres. Ces broyés proviennent d'étapes antérieures de broyage et de séparations densimétriques. Ils contiennent une diversité de matières plastiques : ABS, PS et caoutchoucs et élastomères.

Le but est de séparer l'ABS, qui est la matière « noble » dont le procédé doit permettre la récupération de la plus grande partie, et les impuretés et matériaux indésirables que sont le PS, les caoutchoucs et les élastomères.

Les matériaux broyés introduits dans l'installation sont d'abord égouttés dans une centrifugeuse (1). Les matériaux broyés traversent cette centrifugeuse (1) avant de traverser un dépoussiéreur (2), avant d'être déversés dans une cuve (3) contenant un agent chimique.

Cet agent chimique est choisi parmi les produits aptes à modifier de manière sélective la densité apparente des élastomères et des caoutchoucs sans dénaturer les thermoplastiques à récupérer.

Le but de cette dégradation est de modifier la densité de façon à faciliter la séparation ultérieure dans un séparateur contenant un bain densimétrique.

Un premier type d'agent chimique assure la dégradation partielle de la structure alvéolaire du caoutchouc et des élastomères, en détruisant partiellement l'un des composants du caoutchouc, par exemple le plastifiant ou une quelconque des molécules formant le caoutchouc séparant les cellules fermées, afin de rendre les granules de caoutchoucs plus perméables aux agents de densité du bain de séparation par flottaison.

De nombreux agents chimiques connus de l'homme du métier peuvent être mis en oeuvre pour produire cet effet de déstructuration des caoutchoucs et élastomères alvéolaires. Leur qualification relève d'opérations simples, consistant à vérifier l'évolution de la densité apparente après mise en contact prolongé avec l'agent chimique. L'agent chimique sera qualifié lorsque la densité apparente différera d'au moins 1% de la densité apparente des produits à récupérer, et de préférence de 3%.

A titre d'exemple non limitatif, un tel agent chimique est un distillat léger de pétrole hydrotraité à base d'esters végétaux. Un tel agent a une action destructurante sur des granules de caoutchoucs thermodurcissables alvéolaires en huit heures environ, à température ambiante. Les esters végétaux présentent par ailleurs l'avantage d'être biodégradables, sans danger pour l'environnement selon la norme OCDE 301B, et sans composés volatils.

L'agent chimique peut également agir sur la densité apparente des granulés par un autre mode, à savoir par une interaction surfacique sélective avec les élastomères et caoutchoucs thermodurcissables, par exemple par une modification moléculaire ou physico-chimique, minérale ou encore électrostatique.

Un tel agent peut être minéral ou organique, le cas échéant associé à un composant interagissant sélectivement avec la surface des granules de caoutchoucs.

La cuve (3) contient un agitateur (4) dans l'exemple décrit.

Le flux de matières broyées provenant du dépoussiéreur (2) est fixé de façon à assurer une durée de transfert moyenne de l'ordre de 8 heures.

A la sortie de la cuve (3), le contenu traverse un crible (5) permettant l'égouttage des matières solides et la récupération de l'agent chimique. L'agent chimique est filtré par un filtre (6) avant d'être réintroduit dans la première cuve (3).

Les matières solides sont transférées en continu dans une cuve de rinçage (7) contenant de l'eau, avant d'être déversées dans un séparateur densimétrique (8) à densité 1 contenant un bain d'eau. Les flottants sont récupérés par débordement dans un crible (9) séparant l'agent chimique qui est récupéré dans un bac (10) pour être réintroduit dans le circuit de circulation, en amont du filtre (6), et les matières solides sont éliminées ou retraitées.

Les matières thermoplastiques, par exemple l'ABS à recycler sont récupérées par une vis sans fin (11) puis séchées dans une centrifugeuse (12). Les matières thermoplastiques traversent un dépoussiéreur (13) assurant un envoi d'air et sont ensuite stockées dans un silo (14) contenant un moyen de brassage contribuant au séchage, avant d'être traitées dans une extrudeuse.

### Installation de prétraitement

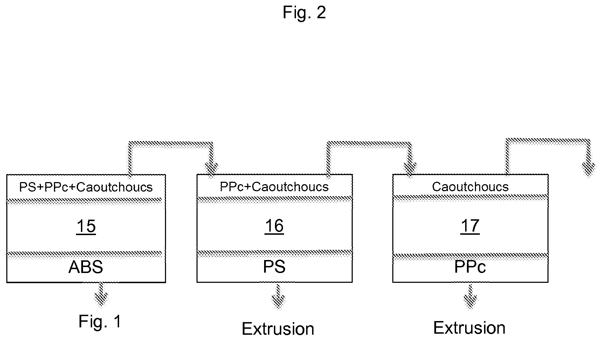

La figure 2 représente une installation de prétraitement optionnelle.

Selon une variante optionnelle, les matériaux broyés introduits dans l'installation décrite dans ce qui précède proviennent d'un séparateur densimétrique (15) séparant des composants l'ABS d'une part et le polystyrène et le polypropylène chargé d'autre part, et permettant de récupérer un mélange d'ABS et de caoutchoucs et d'éliminer une partie des caoutchoucs et une grande majorité du polystyrène et de polypropylène chargé. Ce séparateur (15) contient un bain densimétrique.

Les broyés d'ABS et de caoutchoucs ainsi isolés sont ensuite envoyés dans la centrifugeuse (1) précédemment décrite.

Les caoutchoucs qui sont éliminés à cette étape sont les mousses et les caoutchoucs thermodurcissables les plus alvéolaires. Ils sont envoyés, en mélange avec le polypropylène chargé et le polystyrène, dans un séparateur (16) qui contient un deuxième bain densimétrique de densité 1.

Dans ce deuxième séparateur (16), le polystyrène est récupéré et séparé du polypropylène chargé et du caoutchouc alvéolaire.

Le polypropylène chargé et du caoutchouc alvéolaire sont introduit dans un troisième séparateur (17) contenant un bain densimétrique de densité 1, pour séparer le polypropylène chargé, qui est récupéré et recyclé.

Les caoutchoucs alvéolaires sont éliminés.

## Revendications

1. Procédé de tri sélectif de matériaux broyés de natures différentes comprenant des matières plastiques ainsi que des impuretés constituées d'élastomères ou de caoutchoucs thermodurcissables, ledit procédé comportant au moins une étape de séparation par densité, **caractérisé en ce qu'**il comporte une étape de traitement de l'ensemble desdits matériaux dans un bain contenant un agent chimique apte à modifier de manière sélective la densité apparente des élastomères et caoutchoucs par une dégradation partielle d'un des constituants de l'élastomère ou du caoutchouc ou par une interaction sélective surfacique avec les granules d'élastomères ou de caoutchoucs thermodurcissables puis à appliquer une étape de rinçage desdits matériaux et à appliquer une étape de séparation par densité dans un bain de densité 1.

2. Procédé de tri sélectif selon la revendication 1 **caractérisé en ce que** ledit agent chimique est des distillats de pétrole.

3. Procédé de tri sélectif selon la revendication 1 **caractérisé en ce que** ledit agent chimique est des distillats légers de pétrole hydrotraités.

4. Procédé de tri sélectif selon la revendication 2 **caractérisé en ce que** ledit agent chimique est des distillats légers de pétrole hydrotraités à base d'esters végétaux sans composés organo-volatils.

5. Procédé de tri sélectif selon la revendication 1 **caractérisé en ce que** ladite étape de traitement dans un bain contenant ledit agent chimique est réalisée dans une cuve comportant des moyens d'agitation pendant une durée d'au moins une heure.

6. Procédé de tri sélectif selon la revendication 1 **caractérisé en ce qu'**il comporte une étape d'égouttage des matériaux issus de la cuve de traitement par l'agent chimique.

7. Procédé de tri sélectif selon la revendication 1 **caractérisé en ce qu'**il comporte, préalable à l'entrée des matériaux plastiques dans la cuve de traitement par ledit agent chimique, une étape de séchage mécanique, notamment dans une centrifugeuse.

8. Procédé de tri sélectif selon la revendication 1 **caractérisé en ce qu'**il comporte, préalable à l'entrée des matériaux plastiques dans la cuve de traitement par ledit agent chimique une étape de dépoussiérage.

9. Procédé de tri sélectif selon la revendication 1 **caractérisé en ce que** les matériaux plastiques sortant de la cuve de traitement par ledit agent chimique sont traités dans un équipement d'égouttage comportant des moyens de récupération de l'agent et de réinjection dans ladite cuve de traitement.

10. Procédé de tri sélectif selon la revendication 1 **caractérisé en ce que** l'étape finale de séparation dans un bain de densité 1 est réalisée dans une cuve comportant des moyens de récupération des fractions lourdes en vue de leur réutilisation, ainsi que des moyens de récupération du flottant comprenant un crible pour séparer les matières solides de l'agent chimique, ledit agent chimique étant réintroduit dans ladite cuve de traitement.

11. Procédé de tri sélectif selon la revendication 1 **caractérisé en ce qu'**il comporte une étape de prétraitement par séparation densimétrique (15) séparant des composants styréniques tels que l'ABS d'une part et le PS d'autre part dans un bain, pour récupérer un mélange d'ABS et de caoutchoucs et éliminer une partie des caoutchoucs et une grande majorité du polystyrène.

12. Procédé de tri sélectif selon la revendication précédente **caractérisé en ce que** l'étape de prétraitement comprend en outre une étape de séparation densimétrique dans un séparateur (16) qui contient un deuxième bain densimétrique de densité 1, pour récupérer le polystyrène et le séparer du polypropylène chargé et du caoutchouc alvéolaire.

13. Procédé de tri sélectif selon la revendication précédente **caractérisé en ce que** l'étape de prétraitement comprend en outre une étape de séparation densimétrique dans un séparateur (17) contenant un bain densimétrique de densité 1, pour séparer le polypropylène chargé.

14. Installation pour la mise en œuvre du procédé conforme à l'une au moins des revendications précédentes, **caractérisée en ce qu'**elle comprend au moins une cuve (3) contenant un agent chimique apte à modifier de manière sélective la densité apparente des élastomères et des caoutchoucs sans dénaturer les thermoplastiques à récupérer par une dégradation partielle d'un des constituants de l'élastomère ou du caoutchouc ou par une interaction sélective surfacique avec les granules d'élastomères ou de caoutchoucs thermodurcissables, un crible (5) permettant l'égouttage des matières solides et la récupération de l'agent chimique à partir du contenu provenant de ladite cuve (3).

15. Installation selon la revendication précédente **caractérisée en ce qu'**elle comprend en outre des moyens pour le transfert des matières solides dans une cuve de rinçage (7) contenant de l'eau, avant d'être déversées dans un séparateur densimétrique (8) à densité 1 contenant un bain d'eau.

16. Installation selon la revendication précédente **caractérisée en ce que** ladite cuve de rinçage (7) comprend des moyens pour récupérer les flottants par débordement dans un crible (9) séparant l'agent chimique qui est récupéré dans un bac (10) pour être réintroduit dans le circuit de circulation, en amont du filtre (6), et les matières solides sont éliminées ou retraitées.

17. Installation selon la revendication précédente **caractérisée en ce que** ledit séparateur (8) comprend une vis sans fin (11) pour récupérer les matières thermoplastiques et des moyens pour transporter lesdites matières thermoplastiques dans une centrifugeuse (12) et un dépoussiéreur (13) assurant un envoi d'air.

18. Installation selon l'une quelconque des revendications 14 à 17 **caractérisée en ce qu'**elle comporte en outre en aval du séparateur (8) une centrifugeuse et un dépoussiéreur pour l'égouttage des matériaux granulaires introduits dans l'installation.

19. Installation selon l'une quelconque des revendications 14 à 18 **caractérisée en ce que** l'agent chimique est filtré par un filtre (6) avant d'être réintroduit dans la cuve (3).

## Patentansprüche

1. Verfahren zur selektiven Sortierung zerkleinerter Materialien unterschiedlicher Art, die Kunststoffe sowie Verunreinigungen, bestehend aus wärmehärtbaren Elastomeren oder Kautschuken umfassen, wobei das Verfahren mindestens einen Schritt der Trennung durch Dichte umfasst, **dadurch gekennzeichnet, dass** es einen Schritt umfasst, in dem alle Materialien in einem Bad mit einem chemischen Wirkstoff behandelt werden, der in der Lage ist, die Schüttdichte der Elastomere und Kautschuke durch den teilweisen Abbau einer der Bestandteile des Elastomers oder Kautschuks oder durch selektive Oberflächeninteraktion mit dem wärmehärtbaren Elastomer- und Gummigranulat zu modifizieren, dann einen Schritt der Spülung der Materialien und anschließend einen Schritt der Trennung durch Dichte in einem Bad der Dichte 1 anzuwenden.

2. Selektives Sortierverfahren nach Anspruch 1, **dadurch gekennzeichnet, dass** es sich bei dem chemischen Wirkstoff um Erdöldestillate handelt.

3. Selektives Sortierverfahren nach Anspruch 1, **dadurch gekennzeichnet, dass** es sich bei dem chemischen Wirkstoff um leichte, mit Wasserstoff behandelte Erdöldestillate handelt.

4. Selektives Sortierverfahren nach Anspruch 2, **dadurch gekennzeichnet, dass** es sich bei dem chemischen Wirkstoff um leichte, mit Wasserstoff behandelte Erdöldestillate aus Pflanzenestern ohne flüchtige organische Verbindungen handelt.

5. Selektives Sortierverfahren nach Anspruch 1, **dadurch gekennzeichnet, dass** der Behandlungsschritt in einem, den chemischen Wirkstoff enthaltenden Bad mindestens eine Stunde lang in einem Behälter mit Rührmitteln durchgeführt wird.

6. Selektives Sortierverfahren nach Anspruch 1, **dadurch gekennzeichnet, dass** es einen Schritt zum Abtropfen der aus dem Behandlungsbehälter mit dem chemischen Wirkstoff kommenden Materialien umfasst.

7. Selektives Sortierverfahren nach Anspruch 1, **dadurch gekennzeichnet, dass** es vor dem Eintritt der Kunststoffe in den Behälter zur Behandlung mit dem chemischen Wirkstoff einen Schritt der mechanischen Trocknung, insbesondere in einer Zentrifuge, umfasst.

8. Selektives Sortierverfahren nach Anspruch 1, **dadurch gekennzeichnet, dass** es vor dem Eintritt der Kunststoffe in den Behälter zur Behandlung mit dem chemischen Wirkstoff einen Schritt der Entstaubung umfasst.

9. Selektives Sortierverfahren nach Anspruch 1, **dadurch gekennzeichnet, dass** die Kunststoffe, die aus dem Behälter zur Behandlung mit dem chemischen Wirkstoff kommen, in einer Abtropfvorrichtung behandelt werden, die Mittel zur Rückgewinnung und Wiedereinspeisung des Wirkstoffs in den Behandlungsbehälter umfasst.

10. Selektives Sortierverfahren nach Anspruch 1, **dadurch gekennzeichnet, dass** der abschließende Schritt der Trennung in einem Bad der Dichte 1 in einem Behälter durchgeführt wird, der Mittel zur Rückgewinnung schwerer Fraktionen zu deren Wiederverwendung umfasst, sowie Mittel zur Rückgewinnung der schwimmenden Bestandteile, die ein Sieb zum Trennen der Feststoffe vom chemischen Wirkstoff umfassen, wobei der chemische Wirkstoff wieder in den Behandlungsbehälter rückgeführt wird.

11. Selektives Sortierverfahren nach Anspruch 1, **dadurch gekennzeichnet, dass** es einen Vorbehandlungsschritt durch Dichtetrennung (15) umfasst, in dem Styrole, wie zum Beispiel einerseits ABS und andererseits PS, in einem Bad getrennt werden, um eine Mischung aus ABS und Kautschuken zurückzugewinnen und einen Teil der Kautschuke und einen Großteil des Polystyrols zu beseitigen.

12. Selektives Sortierverfahren nach dem vorhergehenden Anspruch, **dadurch gekennzeichnet, dass** der Vorbehandlungsschritt des Weiteren einen Schritt der Dichtetrennung in einem Ausleser (16) umfasst, der ein zweites densimetrisches Bad der Dichte 1 enthält, um das Polystyrol zurückzugewinnen und es vom gefüllten Polypropylen und vom Zellkautschuk zu trennen.

13. Selektives Sortierverfahren nach dem vorhergehenden Anspruch, **dadurch gekennzeichnet, dass** der Vorbehandlungsschritt des Weiteren einen Schritt der Dichtetrennung in einem Ausleser (17) mit einem densimetrisches Bad der Dichte 1 umfasst, um das gefüllte Polypropylen abzuscheiden.

14. Anlage zur Durchführung des Verfahrens nach mindestens einem der vorhergehenden Ansprüche, **dadurch gekennzeichnet, dass** sie mindestens einen Behälter (3) mit einem chemischen Wirkstoff umfasst, der in der Lage ist, die Schüttdichte der Elastomere und Kautschuke selektiv zu modifizieren, ohne die zurückzugewinnenden Thermoplaste durch den teilweisen Abbau einer der Bestandteile des Elastomers oder Kautschuks oder durch eine selektive Oberflächeninteraktion mit dem wärmehärtbaren Elastomer- oder Kautschukgranulat zu denaturieren, wobei ein Sieb (5) das Abtropfen der Feststoffe und die Rückgewinnung des chemischen Wirkstoffs aus dem Inhalt des Behälters (3) ermöglicht.

15. Anlage nach dem vorhergehenden Anspruch, **dadurch gekennzeichnet, dass** sie des Weiteren Mittel zum Befördern der Feststoffe in mit Wasser gefüllte Spülbehälter (7) umfasst, bevor sie in einen, ein Wasserbad enthaltenden Ausleser (8) mit Dichte 1 eingeleitet werden.

16. Anlage nach dem vorhergehenden Anspruch, **dadurch gekennzeichnet, dass** der Spülbehälter (7) Mittel zur Rückgewinnung der aufschwimmenden Bestandteile durch Überlauf in ein Sieb (9) umfasst, das den chemischen Wirkstoff abscheidet, wobei dieser in einem Behälter (10) wiedergewonnen und stromaufwärts des Filters (6) wieder in den Kreislauf zurückgeführt wird, und die Feststoffe beseitigt oder wiederaufbereitet werden.

17. Installation nach dem vorhergehenden Anspruch, **dadurch gekennzeichnet, dass** der Ausleser (8) eine Schnecke (11) zur Rückgewinnung der thermoplastischen Materialien umfasst und Mittel zur Beförderung der thermoplastischen Materialien in eine Zentrifuge (12), und eine Entstaubungsvorrichtung (13), die das Zuführen von Luft gewährleistet.

18. Anlage nach einem der Ansprüche 14 bis 17, **dadurch gekennzeichnet, dass** sie des Weiteren stromabwärts des Auslesers (8) eine Zentrifuge und eine Entstaubungsanlage zum Abtropfen der in die Anlage eingebrachten granulierten Materialien umfasst.

19. Anlage nach einem der Ansprüche 14 bis 18, **dadurch gekennzeichnet, dass** der chemische Wirkstoff vor seiner Rückführung in den Behälter (3) mit einem Filter (6) gefiltert wird.

## Claims

1. A method for selectively sorting different types of ground materials containing plastic materials as well as impurities consisting of elastomers or thermosetting rubbers, said method including at least one step of separation by density, **characterized in that** it comprises a step of treating all of said materials in a bath containing a chemical agent capable of selectively modifying the bulk density of elastomers and rubbers by partial degradation of one of the components of the elastomer or rubber or by selective surface interaction with the granules of elastomers or thermosetting rubbers, then applying a step of rinsing to said materials and applying a step of separation by density in a bath with a density of 1.

2. A selective sorting method according to claim 1, **characterized in that** said chemical agent is petroleum distillates.

3. A selective sorting method according to claim 1, **characterized in that** said chemical agent is hydrotreated light petroleum distillates.

4. A selective sorting method according to claim 2, **characterized in that** said chemical agent is hydrotreated light petroleum distillates based on vegetable esters without volatile organic compounds.

5. A selective sorting method according to claim 1, **characterized in that** said step of treatment in a bath containing said chemical agent is carried out in a tank comprising stirring means for a period of at least one hour.

6. A selective sorting method according to claim 1, **characterized in that** it includes a step of draining off the materials from the chemical agent treatment tank.

7. A selective sorting method according to claim 1, **characterized in that** it includes, prior to the entry of the plastic materials into said chemical agent treatment tank, a step of mechanical drying, in particular in a centrifuge.

8. A selective sorting method according to claim 1, **characterized in that** it includes, prior to the entry of the plastic materials into said chemical agent treatment tank, a step of dust collection.

9. A selective sorting method according to claim 1, **characterized in that** the plastic materials leaving said chemical agent treatment tank are treated in a draining off equipment comprising means for recovering the agent and reinjecting same into said treatment tank.

10. A selective sorting method according to claim 1, **characterized in that** the final step of separation in a bath with a density of 1 is carried out in a tank comprising means for recovering heavy fractions for reuse, as well as means for recovering the float comprising a screen to separate the solid materials from the chemical agent, said chemical agent being reintroduced into said treatment tank.

11. A selective sorting method according to claim 1, **characterized in that** it includes a step of pretreatment by densimetric separation (15) separating styrenic components such as ABS on the one hand and PS on the other hand in a bath, to recover a mixture of ABS and rubbers and remove some of the rubbers and a large majority of the polystyrene.

12. A selective sorting method according to the preceding claim, **characterized in that** the step of pretreatment further comprises a step of densimetric separation in a separator (16) which contains a second densimetric bath with a density of 1, to recover the polystyrene and separate same from the filled polypropylene and cellular rubber.

13. A selective sorting method according to the preceding claim, **characterized in that** the step of pretreatment further comprises a step of densimetric separation in a separator (17) containing a densimetric bath with a density of 1, to separate the filled polypropylene.

14. Equipment for implementing the method according to at least one of the preceding claims, **characterized in that** it comprises at least one tank (3) containing a chemical agent capable of selectively modifying the bulk density of elastomers and rubbers without denaturing the thermoplastics being recovered by partial degradation of one of the components of the elastomer or rubber or by selective surface interaction with the granules of elastomer or thermosetting rubber, a screen (5) for draining off the solid materials and recovering the chemical agent from the contents of said tank (3).

15. Equipment according to the preceding claim, **characterized in that** it further comprises means for transferring solid materials into a rinsing tank (7) containing water, before being discharged into a densimetric separator (8) with a density of 1 containing a water bath.

16. Equipment according to the preceding claim, **characterized in that** said rinsing tank (7) comprises means for recovering the floats by overflow in a screen (9) separating the chemical agent which is recovered in a tank (10) to be reintroduced into the circulation circuit, upstream of the filter (6), and the solid materials are eliminated or reprocessed.

17. Equipment according to the preceding claim, **characterized in that** said separator (8) comprises an endless screw (11) for recovering the thermoplastic materials and means for transporting said thermoplastic materials in a centrifuge (12) and a dust collector (13) ensuring air supply.

18. Equipment according to any one of claims 14 to 17, **characterized in that** it further includes, downstream of the separator (8), a centrifuge and a dust collector for draining off the granular materials introduced into the equipment.

19. Equipment according to any one of claims 14 to 18, **characterized in that** the chemical agent is filtered through a filter (6) before being reintroduced into the tank (3).
